Europäisches Patentamt

European Patent Office

Office européen des brevets

(19)

(11)  **EP 1 470 851 A1**

(12)  # EUROPEAN PATENT APPLICATION

(43) Date of publication:
**27.10.2004  Bulletin 2004/44**

(51) Int Cl.⁷: **B01D 53/56**, B01D 53/79,
B01D 53/86

(21) Application number: **04009798.2**

(22) Date of filing: **26.04.2004**

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK**<br><br>(30) Priority: **24.04.2003  KR 2003025953**<br><br>(71) Applicant: **Kocat Inc.**<br>**Seoul 150-803 (KR)**<br><br>(72) Inventors:<br> • **Kim, Du-Soung**<br>  **Gangnam-gu Seoul, 135-080 (KR)** | • **Lee, Jihn-Koo**<br>  **Chungcheongnam-do, 356-070 (KR)**<br> • **Kha, Myoung-Jin**<br>  **Chungcheongnam-do, 356-020 (KR)**<br> • **Lee, Seung-Jae**<br>  **Seosan-si Chungcheongnam-do 356-824 (KR)**<br><br>(74) Representative: **Eisenführ, Speiser & Partner**<br>**Patentanwälte Rechtsanwälte**<br>**Postfach 10 60 78**<br>**28060 Bremen (DE)** |

(54)   **Method for removing nitrogen dioxide in the exhaust gas from a stationary combustion source**

(57)   Disclosed are an apparatus and a method for treating exhaust gas. The apparatus includes a pipe (2) for providing a flow path of the exhaust gas containing nitrogen dioxide from a stationary source combustion process using gases as a fuel. One or more nozzles (4) are installed in the pipe (2), which can spray air and a reducing or an oxidizing agent to the exhaust gas flowing in the pipe (2). Additionally, a storage tank (6) is installed to store the reducing or oxidizing agent therein. Furthermore, an injection pump (8) is connected to the storage tank (6) and nozzle (4) at a position between the storage tank (6) and nozzle (4) to feed the reducing or oxidizing agent from the storage tank (6) to the nozzle (4), and an air pump (10) is connected to the nozzle (4) to feed the air into the pipe (2).

**EP 1 470 851 A1**

**Description**

Technical Field

Generally the present invention relates to an apparatus and a method of removing nitrogen dioxide from a stationary source combustion process. Particularly to an apparatus and a method of converting nitrogen dioxide to nitrogen monoxide or nitrogen by spraying a reducing or an oxidizing agent into a flow of exhaust gas containing nitrogen oxides such as nitrogen dioxide ($NO_2$) from the stationary source combustion process.

Background Art

As well known to those skilled in the art, kinds and concentrations of gases contained in exhaust gas from stationary source combustion process vary based on the kinds of fuel. For example, in the case of a stationary source using a solid (coal) and a liquid (bunker fuel oil C etc.) as the fuel, sulfur and nitrogen compounds contained in the fuel are combusted to produce sulfur oxides (SOx) and nitrogen oxides (NOx).
Particularly, it is widely known that nitrogen dioxide of nitrogen oxides from the stationary source is subjected to a photochemical reaction with various compounds in air to generate photochemical compounds and ozone causing photochemical smog, thereby contaminating human body and the environment.
Nitrogen dioxide is known as a reddish brown color gas which causes public irritation when it is released from the chimney. Additionally, it is reported that the visible gas is frequently generated during the diffusion-combustion process at low power output (90 MW or lower). An amount of the visible gas is increased when the retention time of the exhaust gas in the chimney is increased, diameter of the chimney is increased and the flow rate and temperature of the exhaust gas is decreased in the chimney.
Meanwhile, sulfur oxide is usually removed by limestone-plaster process, and nitrogen dioxide is removed by selective catalytic reduction (SCR) process in which nitrogen dioxide is converted into nitrogen and water using a reducing agent in the presence of a catalyst.
Ammonia is widely used as the reducing agent in the selective catalytic reduction process since it has an excellent catalytic reactivity and selectivity. For example, U.S. Pat. No. 5,024,981 discloses an $NH_3$-SCR process of selectively removing nitrogen dioxide contained in exhaust gas with a honeycomb-structured catalyst, in which an active material, comprising vanadium and tungsten supported by a titania carrier.
Recently, using of gases such as liquefied natural gas (LNG) evaluated as a pure fuel is increased so as to minimize pollutants from the stationary source combustion process. Unlike the case of using coals and oils as the fuel, the liquefied natural gas contains few nitrogen compounds and it only emits a small amount of nitrogen oxides below a limit of tolerance.
Meanwhile, in the case of using the gases as the fuel, most of nitrogen oxides contained in the exhaust gas from the stationary source are generated by oxidation of nitrogen contained in the air at a high temperature, and concentration of nitrogen oxides depends on operational conditions such as load of an engine used in the combustion process.
When the selective catalytic reduction process is conducted using a traditional catalyst so as to remove a small amount of nitrogen dioxide visible gas discharged from the stationary source using the gases as the fuel, nitrogen dioxide is effectively removed, but there remain disadvantages of increased equipment cost and pressure dissipation due to the catalyst.
Particularly, in the selective catalytic reduction process, a required amount of the catalyst depends on a space velocity provided by catalyst manufactures or engineering companies. For example, in the commercialized $NH_3$-SCR process, the space velocity is 5000 to 7000 $h^{-1}$, thus, when considering that a usual flow rate of the exhaust gas from the stationary source depending on a power generation capacity is 500,000 to 1,000,000 $Nm^3/h$, the amount of the catalyst is 70 to 200 $m^3$. Accordingly, the commercial $NH_3$-SCR process is not efficient in terms of catalyst cost.
Additionally, in the case of the stationary source using the gases as the fuel, if a catalytic reactor is installed in a traditional system, gas flow is disturbed due to a pressure difference before and after the catalyst, so negatively affecting the combustion process before the catalytic reaction. Accordingly, it is necessary to enlarge equipments to use the catalyst, so enormous investment cost is needed to remove a relatively small amount of nitrogen dioxide visible gas. Furthermore, the equipments require larger area causing difficulties in securing the location for the equipments.
Meanwhile, in the case of the stationary source using the gases as the fuel, it takes only 30 min or less for a concentration of the visible gas to reach a visible value depending on operational load of an engine. For this reason, using of a SCR catalyst for reducing the concentration of nitrogen dioxide generated within a relatively short time is not competitive in terms of economic efficiency, causing electric-power production cost to be undesirably increased.
Therefore, there remains a need to develop a technology of converting nitrogen dioxide contained in the exhaust gas from a power plant into nitrogen monoxide and nitrogen, while it is comprised of steps of injecting reducing or oxidizing agent into the exhaust gas through an apparatus for treating the exhaust gas without using additional devices.

Meanwhile, U.S. Pat. No. 5,489,420 discloses a technology of removing nitrogen oxides by adding reducing agent into the nitrogen oxides at a high temperature, in which nitrogen oxides are removed at a high temperature of 950°C or higher using ammonia, and U.S. Pat. Nos. 5,443,805 and 5,536,482 suggest a process of removing nitrogen oxides by adding polymers into ammonia at 900 to 1200°C.

Disclosure of the Invention

Accordingly, the present invention has been made keeping in mind the above problems occurring in the prior art. An object of the present invention is to provide an apparatus and methods of converting nitrogen dioxide to nitrogen monoxide or nitrogen by spraying a reducing or an oxidizing agent into a flow of exhaust gas containing nitrogen oxides such as nitrogen dioxide ($NO_2$) from a stationary source combustion process.

Another object of the present invention is to prevent the reducing or oxidizing agent from being combusted before the reducing or oxidizing agent reacts with nitrogen dioxide by installing nozzles for spraying the reducing or oxidizing agent into a flow path of the exhaust gas in a pipe and insulating the pipe, connected to the nozzles, through which the exhaust gas flows.

It is still another object of the present invention to allow nitrogen dioxide to easily come into contact with the reducing or oxidizing agent which enables to improve removal efficiency of nitrogen dioxide by spraying the reducing or oxidizing agent to the flow path of the exhaust gas in such a way that the reducing or oxidizing agent is sprayed through only one tube or a plurality of tubes into the exhaust gas at once, or sequentially sprayed through the tubes into the exhaust gas.

In order to accomplish the above objects, the present invention provides an apparatus for treating exhaust gas, including a pipe for providing a flow path of the exhaust gas containing nitrogen dioxide from a stationary source combustion process using gases as fuel. One or more nozzles are installed in the pipe and spray air and a reducing or an oxidizing agent into the exhaust gas flowing through the pipe. A storage tank is installed to store the reducing or oxidizing agent therein. Furthermore, an injection pump is connected to the storage tank and nozzle at a position between the storage tank and nozzle to feed the reducing or oxidizing agent from the storage tank to the nozzle, and an air pump is connected to the nozzle to feed the air into the pipe.

In other point of view, the present invention provides a method of treating exhaust gas, including the steps of feeding the exhaust gas containing nitrogen dioxide at 200 to 700°C from a stationary source combustion process using gases as fuel into the pipe of the apparatus, and spraying the reducing or oxidizing agent into the exhaust gas flowing through the pipe.

The present invention defines the exhaust gas that is emitted from the stationary source combustion process using the gases as the fuel, which contains lower content of nitrogen oxides such as nitrogen dioxide than exhaust gas from the stationary source combustion process using coals and oils as the fuel.

The reducing or oxidizing agent is sprayed in conjunction with air from the nozzles into the exhaust gas, which can reduce nitrogen dioxide contained in the exhaust gas to nitrogen monoxide or convert nitrogen dioxide to nitrogen. At this time, a molar ratio of the reducing or oxidizing agent to nitrogen oxides contained in the exhaust gas is at least 0.1 or higher.

At this time, the reducing agent may be any substances, which can reduce nitrogen dioxide to nitrogen monoxide, for example ammonia and its derivatives such as ammonia, ammonia water, and urea, and/or a hydrocarbon such as an unsaturated hydrocarbon and/or a heterogeneous hydrocarbon. Among these substances ammonia water is mostly preferred.

Furthermore, the oxidizing agent may be any substance, which can convert nitrogen dioxide to nitrogen, for example hydrogen peroxide ($H_2O_2$) and ozone ($O_3$). Among these hydrogen peroxide is mostly preferred.

Meanwhile, the air of present invention enables the reducing or oxidizing agent to be widely sprayed from the nozzles to the exhaust gas. Any gas may be used instead of air so long as it is inert and not reacted with the reducing or oxidizing agent. However, it is preferable that air is used in conjunction with the reducing or oxidizing agent in consideration of its price and easiness in obtaining it.

The reducing or oxidizing agent according to the present invention may be sprayed into the exhaust gas without being mixed with air, but if it is sprayed through the nozzles to the exhaust gas without being mixed with air, the reducing or oxidizing agent is not sufficiently sprayed into the whole exhaust gas.

Brief Description of the Drawings

The objects, features and other advantages of the present invention will be more clearly understood from the following detailed description taken in conjunction with the accompanying drawings, in which:

FIG. 1 schematically illustrates the apparatus for treating exhaust gas according to the embodiment of the present invention;

FIG. 2 schematically illustrates another aspect of the apparatus for treating exhaust gas according to the embodiment of the present invention;

FIG. 3 is a graph showing conversion efficiency of nitrogen dioxide using ammonia as a reducing agent according to the present invention;

FIG. 4 is a graph showing conversion efficiency of nitrogen dioxide using hydrocarbons as the reducing agent according to the present invention;

FIG. 5 is a graph showing conversion efficiency of nitrogen dioxide depending on a molar ratio of ethanol to nitrogen dioxide according to the present invention;

FIG. 6 is a graph showing conversion efficiency of nitrogen dioxide using hydrogen peroxide as an oxidizing agent according to example 8 of the present invention; and

FIG. 7 is a graph showing conversion efficiency of nitrogen dioxide using ethanol as the reducing agent when a nozzle of the present invention is insulated or not.

Best Mode for Carrying Out the Invention

Reference should now be made to the drawings, in which the same reference numerals are used throughout the different drawings to designate the same or similar components.

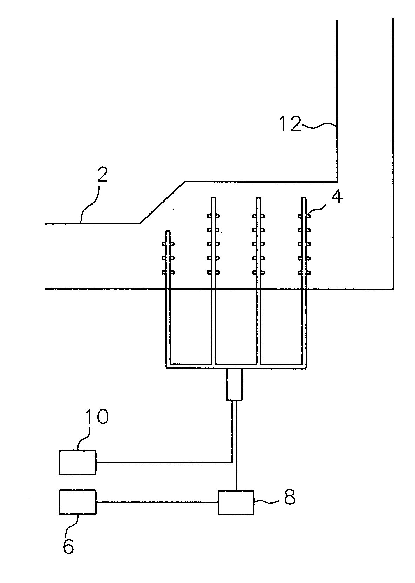

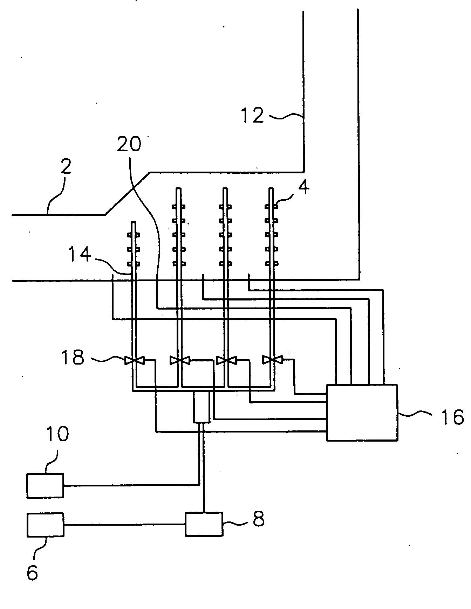

FIG. 1 schematically illustrates the apparatus for treating exhaust gas according to the embodiment of the present invention, and FIG. 2 schematically illustrates another aspect of the apparatus for treating exhaust gas according to the embodiment of the present invention.

With reference to FIGS. 1 and 2, the apparatus according to the present invention includes a pipe 2 acting as a flow path of exhaust gas containing nitrogen dioxide from a stationary source combustion process using gases as a fuel, one or more nozzles 4 installed in the pipe 2 and spraying the reducing or oxidizing agent to the exhaust gas flowing in the pipe 2, a storage tank 6 for storing the reducing or the oxidizing agent sprayed by the nozzles 4 therein, an injection pump 8 installed between the storage tank 6 and the nozzles 4 to transport the reducing agent and/or oxidizing agent from the storage tank 6 to the nozzles 4, an air pump 10 connected to the nozzles 4 to feed highly compressed air into the pipe, and a chimney 12 for discharging the treated exhaust gas through.

The pipe 2 according to the present invention is connected with the stationary source at a first end to receive the exhaust gas containing nitrogen dioxide from the stationary source combustion process using the gases as the fuel, and is communicated with the chimney 12 at a second end in order to discharge the treated exhaust gas after the exhaust gas containing nitrogen dioxide treated in the pipe 2.

The nozzles 4 according to the present invention are installed in the pipe 2 to spray air and the reducing or oxidizing agent into the exhaust gas containing nitrogen dioxide passing through the pipe 2. In this regard, the nozzles 4 may be installed in any manner in the pipe 2 so long as air and the reducing or oxidizing agent are desirably sprayed into the exhaust gas. Preferably, the nozzles 4 may be installed in the pipe 2 in a single- or multi- stage injection manner so as to easily spray air and the reducing or oxidizing agent into the exhaust gas containing nitrogen dioxide passing through the pipe 2.

According to the single-stage manner, a tube 14 is structured so that plurality of hole is formed on a surface of the tube 14 and the nozzles 4 are connected to the holes, and in the case of the multi-stage manner, two or more tubes as described above are installed in the pipe 2.

Meanwhile, if necessary, the apparatus according to the present invention may further comprise valves 18 installed at the tubes 14 to control a flow rate of a fluid passing through each of the tubes 14, one or more temperature sensors 20 installed in the pipe 2 to sense a temperature of the exhaust gas flowing in the pipe 2, and a control unit 16 connected to the valves 18 and temperature sensors 20 to control the valves 18 based on temperature data from the temperature sensors 20.

At this time, the temperature sensors 20 may be installed at any points in the pipe 2 so long as the temperature of the exhaust gas flowing in the pipe 2 is easily measured.

Meanwhile, if necessary, the nozzles 4 and an outer surface of each of the tubes 14 connected to the nozzles 4 comprising the apparatus of the present invention may be insulated by an insulating material so as to prevent the exhaust gas at 200 to 700°C from combusting the reducing or oxidizing agent. Additionally, cool air may be fed through the nozzles 4 and/or tubes 14 , to effectively prevent the reducing or oxidizing agent passing through the nozzles 4 and the tubes 14 from being combusted by a high temperature of the exhaust gas.

As described above the nozzles 4 that spray air and the reducing or oxidizing agent is connected to the air pump 10 that compresses air supplied from the atmosphere. The nozzles 4 are also sequentially connected to the injection pump 8 that feeds the reducing or oxidizing agent to the nozzles 4, and the storage tank 6 that stores the reducing or oxidizing agent therein. In this regard, the injection pump 8 acting as a power source functions to feed the reducing or oxidizing agent from the storage tank 6 to the nozzle 4.

At this time, the air pump 10 functions to supply compressed air in conjunction with the reducing or oxidizing agent into the nozzles 4 to contribute to injecting the reducing or oxidizing agent at high pressure into the pipe to readily mix the exhaust gas containing nitrogen dioxide with the reducing or oxidizing agent.

Hereinafter, a description will be given of the operation of the apparatus according to the present invention. The exhaust gas containing nitrogen dioxide from the stationary source combustion process using the gases as fuel is fed into the pipe 2 through the nozzles 4.

The reducing or oxidizing agent stored in the storage tank 6 is then fed into the nozzles 4 by the injection pump 8, and air is simultaneously fed into the nozzles 4 by the air pump 10.

Subsequently, the air and the reducing or oxidizing agent fed into the nozzles 4 positioned in the pipe 2 are sprayed into the exhaust gas containing nitrogen dioxide passing through the pipe 2 to reduce nitrogen dioxide to nitrogen monoxide, or to convert nitrogen dioxide to nitrogen, and the treated exhaust gas is discharged through the chimney 12 communicating with the rear end of the pipe 2.

In this regard, as described above, air compressed supplied by the air pump 10 is fed in conjunction with the reducing or oxidizing agent into the nozzles 4 to contribute to spraying the reducing or oxidizing agent at high pressure to the exhaust gas to readily mix the exhaust gas containing nitrogen dioxide with the reducing or oxidizing agent.

Meanwhile, the apparatus for treating the exhaust gas according to the present invention may effectively treat the exhaust gas using the control unit 16 which controls the valves 18 based on temperature data from the temperature sensors 20.

As described above, the apparatus is structured with one or more tubes 14 that include a plurality of nozzles 4 installed in the pipe 2. Each of the tubes 14 is connected to the injection pump 8 and air pump 10, and at least one temperature sensor 20 is installed in the pipe 2.

In this regard, the valves 18 are installed at the tubes 14, and the valves 18 and the temperature sensors 20 are connected to the control unit 16.

When the exhaust gas containing nitrogen dioxide is discharged from the stationary source combustion process used as the fuel, it is fed into the pipe 2 through the tubes 14 each including the plurality of nozzles 4.

At this time, the temperature of the exhaust gas flowing in the pipe 2 is measured by the temperature sensors 20 installed in the pipe 2 and the measured temperature data is transmitted to the control unit 16.

Based on the temperature data from the temperature sensors 20, the control unit 16 opens the valve 18 of the tube 14, if the nozzles 4 have a suitable temperature range such as from 200 to 700°C to convert or reduce nitrogen dioxide, and closes the valves 18 of the remaining tubes 14.

The reducing or oxidizing agent stored in the storage tank 6 is then fed into the tube 14 by the injection pump 8 where the valve 18 is opened, and atmospheric air is simultaneously fed into the tube 14 by the air pump 10 where the valve 18 is opened.

Subsequently, the air and the reducing or oxidizing agent fed into the tube 14 where the valve 18 is opened are sprayed through the nozzles 4 of the tube 14 into the exhaust gas containing nitrogen dioxide flowing in the pipe 2 . This process enables to remove nitrogen dioxide from the exhaust gas by reducing nitrogen dioxide into nitrogen monoxide or converting nitrogen dioxide into nitrogen and discharging the treated exhaust gas through the chimney 12 installed at the rear end of the pipe 2.

At this time, air compressed by the air pump 10 is fed in conjunction with the reducing or oxidizing agent into the nozzles 4 to contribute to spraying the reducing or oxidizing agent at high pressure to the exhaust gas for mixing the exhaust gas containing nitrogen dioxide with the reducing or oxidizing agent easily.

A better understanding of the present invention may be obtained through the following example which is set forth to illustrate, but is not to be construed as the limit of the present invention.

EXAMPLE 1

Removal activity of nitrogen dioxide using ammonia as a reducing agent

As in FIG. 1, a rectangular pipe made of SUS 304 (height 15 cm, width 15 cm, and length 100 cm) was provided, and four tubes were installed in the pipe with a plurality of nozzles [TN050-SRW, Total nozzle Co., Korea] while those tubes spaced apart from each other at intervals of 20 cm.

Ammonia water acting as the reducing agent [Doosan Co., Korea] was charged into a storage tank and the storage tank was connected to an injection pump [M930, Younglin Co., Korea] that was connected to the tubes including the nozzles.

An air pump [HP 2.5, Air bank compressor Co., Korea] was then connected to the tubes including the nozzles to feed air into the pipe.

Subsequently, influx gas having the similar composition to exhaust gas from a combustion process using gases as a fuel was fed into the SUS 304 rectangular pipe. The composition of the influx gas was described in Table 1, below.

TABLE 1

| Composition of the influx gas | | | | | | |
|---|---|---|---|---|---|---|
| Components | NO | $NO_2$ | CO | $O_2$ | $H_2O$ | $N_2$ |
| | 60 ppm | 50 ppm | 170 ppm | 14 % | 6 % | Balance |

Air and ammonia water stored in the storage tank were fed to the nozzles by the air pump and injection pump at the same time while the influx gas passed through the pipe.

At this time, the temperature in the pipe was maintained at 500 to 700°C using an electric furnace [Gibo Co., Korea], and was measured using a K-type thermocouple. A molar ratio of ammonia to nitrogen dioxide was 2, and a contact time between ammonia water sprayed from the nozzles and the exhaust gas passing through the pipe was 0.731 seconds.

Furthermore, the exhaust gas was analyzed by a portable NOx analyzer [MK II, Eurotron, Italy] before and after the reaction of nitrogen dioxide with ammonia water, and conversion efficiency of nitrogen dioxide was calculated by the following Equation 1.

Equation 1

$$NO_2 \ convers.(\%) = \left[ \frac{NO_2 \ concen. \ before \ reaction - NO_2 \ concen. \ after \ reaction}{NO_2 \ concen. \ before \ reaction} \times 100 \right]$$

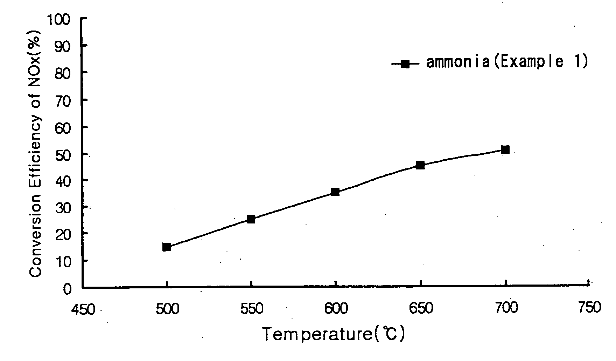

The results were plotted in FIG. 3.

EXAMPLE 2

The procedure of example 1 was repeated except that ethanol was used as a reducing agent instead of ammonia water and a molar ratio of ethanol to nitrogen dioxide was 2.

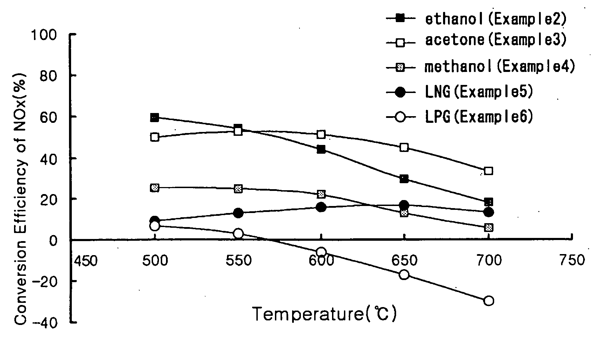

The results were plotted in FIG. 4.

EXAMPLE 3

The procedure of example 1 was repeated except that acetone was used as a reducing agent instead of ammonia water and a molar ratio of acetone to nitrogen dioxide was 2.

The results were plotted in FIG. 4.

EXAMPLE 4

The procedure of example 1 was repeated except that methanol was used as a reducing agent instead of ammonia water and a molar ratio of methanol to nitrogen dioxide was 2.

The results were plotted in FIG. 4.

EXAMPLE 5

The procedure of example 1 was repeated except that LNG was used as a reducing agent instead of ammonia water and a molar ratio of LNG to nitrogen dioxide was 2.

The results were plotted in FIG. 4.

EXAMPLE 6

The procedure of example 1 was repeated except that LPG was used as a reducing agent instead of ammonia water and a molar ratio of LPG to nitrogen dioxide was 2.

The results were plotted in FIG. 4.

EXAMPLE 7

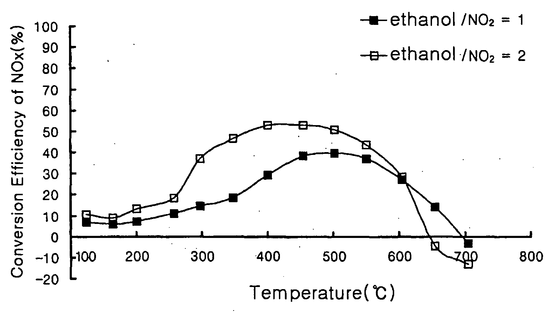

The procedure of example 1 was repeated except that ethanol was used as a reducing agent instead of ammonia water and removal activity of nitrogen dioxide was measured while a molar ratio of ethanol to nitrogen dioxide ranging from 1 to 2.
The results were plotted in FIG. 5.

EXAMPLE 8

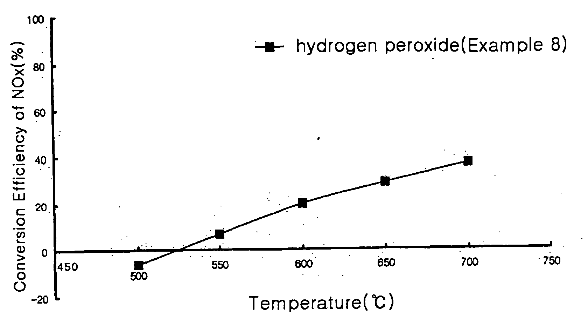

The procedure of example 1 was repeated except that hydrogen peroxide was used as an oxidizing agent instead of ammonia water acting as a reducing agent and a molar ratio of hydrogen peroxide to nitrogen dioxide was 1.
The results were plotted in FIG. 6.

EXAMPLE 9

The apparatus according to example 1 was installed in a real LNG power plant in the 110 MW range [West-Incheon steam power plant, Korea], to measure the differences of removal activity of nitrogen dioxide depending on whether the nozzles were insulated or not. At this time, the apparatus used ethanol as a reducing agent instead of ammonia water. In this regard, a molar ratio of ethanol to nitrogen dioxide was 1.
The removal activity of nitrogen dioxide was tested while the nozzles were not insulated at the beginning of the test. After this test the nozzles and the tubes were insulated and the removal activity of nitrogen dioxide was tested.
The results were described in Table 2.

EXAMPLE 10

The procedure of example 9 was repeated except that a molar ratio of ethanol to nitrogen dioxide was 3.
The results were described in Table 2.

EXAMPLE 11

The procedure of example 9 was repeated except that a molar ratio of ethanol to nitrogen dioxide was 5.
The results were described in Table 2.

TABLE 2

| Ex. | Ethanol/$NO_2$ molar ratio | [1]Before insulation | [2]After insulation |
|---|---|---|---|
| 9 | 1 | 25.9 | 37.8 |
| 10 | 3 | 54.3 | 66.2 |
| 11 | 5 | 82.6 | 94.8 |

[1]Before insulation: removal activity of $NO_2$ before insulation (%)
[2]After insulation: removal activity of $NO_2$ after insulation (%)

Removal activity of nitrogen dioxide increased after the nozzles and tubes were insulated. The reason for this data was that when a temperature of the exhaust gas was 500 to 650°C according to an increase of an engine load, ethanol was partially oxidized even before reaching the nozzles, so reactivity of ethanol to nitrogen dioxide was reduced. Therefore, oxidation of ethanol was suppressed by insulating the nozzles and tubes using an insulating material, thereby increasing removal activity of nitrogen dioxide.

EXAMPLE 12

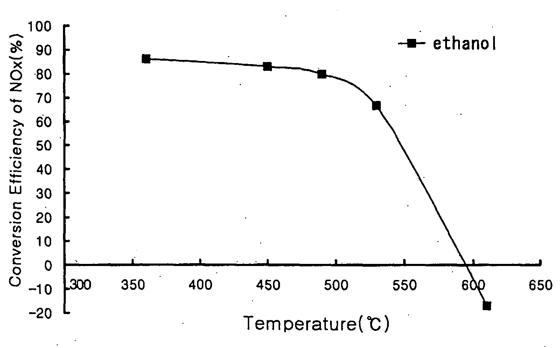

Removal activity of $NO_2$ was tested in an LNG power plant in the 110 MW range [West-Incheon steam power plant, Korea] under test conditions that the molar ratio of ethanol to nitrogen dioxide was 3 and the temperature range of the exhaust gas ranging from 350 to 650°C.
The results were plotted in FIG. 7.
From FIG. 7, it could be seen that when the temperature of the exhaust gas was increased to 500°C or higher, ethanol as a reducing agent was oxidized and removal activity of nitrogen dioxide was greatly reduced.

Industrial Applicability

As described above, the present invention provides an apparatus for economically treating exhaust gas without high initial installation cost or high operational cost needed in a conventional selective catalytic reduction process, in which a reducing agent or an oxidizing agent is sprayed into the exhaust gas containing nitrogen dioxide from a stationary source combustion process and remove nitrogen dioxide by reducing nitrogen dioxide to nitrogen monoxide or converting nitrogen dioxide to nitrogen.

The present invention has been described in an illustrative manner, and it is to be understood that the terminology is intended to be in the nature of description rather than of limitation. Many modifications and variations of the present invention are possible in light of the above teachings. Therefore, it is to be understood that within the scope of the appended claims, the invention may be practiced otherwise than as specifically described.

**Claims**

1.  An apparatus for removing nitrogen dioxide contained in exhaust gas from a stationary source combustion process, comprising:

    a pipe for providing a flow path of the exhaust gas;
    one or more nozzles installed in the pipe for spraying air and a reducing or oxidizing agent to the exhaust gas flow;
    a storage tank that is used for storing the reducing or oxidizing agent;
    an injection pump installed between the storage tank and nozzles to feed the reducing or oxidizing agent from the storage tank to the nozzles; and
    an air pump connected to the nozzle to feed the air into the pipe.

2.  The apparatus as set forth in claim 1, wherein one or more nozzles are connected to one or more tubes installed in the pipe in a single- or multi- stage injection manner, and the air and the reducing or oxidizing agent are sprayed to the exhaust gas through the tube.

3.  The apparatus as set forth in claim 2, further comprising a valve installed at the tube which controls a flow rate of a fluid passing through the tube, at least one temperature sensor installed in the pipe which senses a temperature of the exhaust gas flowing in the pipe, and a control unit connected to the valve and temperature sensor to control the valve based on temperature data output from the temperature sensor.

4.  The apparatus as set forth in any one of claims 1 to 3, wherein the nozzle, the tube, or the nozzle and tube are surrounded by an insulating material to be shielded from heat emitted from the high temperature exhaust gas, cool air flows through the nozzle, the tube or the nozzle and tube to shield the nozzle, the tube, or the nozzle and tube from heat emitted from the high temperature exhaust gas, or the nozzle, the tube, or the nozzle and tube are surrounded by the insulating material while the cool air flows through the nozzle, the tube, or the nozzle and tube to be shielded from heat emitted from the high temperature exhaust gas.

5.  The apparatus as set forth in any one of claims 1 to 3, wherein the oxidizing agent is selected from the group consisting of hydrogen peroxide, ozone, and a mixture thereof.

6.  The apparatus as set forth in any one of claims 1 to 3, wherein the reducing agent is ammonia and/or its derivatives or a hydrocarbon.

7.  The apparatus as set forth in claim 6, wherein the ammonia and/or its derivatives are selected from the group consisting of ammonia gas, ammonia water, urea, and a mixture thereof.

8.  The apparatus as set forth in claim 6, wherein the hydrocarbon is selected from the group consisting of unsaturated hydrocarbon, heterogeneous hydrocarbon, and a mixture thereof.

9.  A method of treating exhaust gas, comprising:

feeding the exhaust gas containing nitrogen dioxide into the pipe of the apparatus according to claims 1 to 8; and

spraying a reducing or an oxidizing agent to the exhaust gas containing nitrogen dioxide flowing in the pipe.

## European Patent Office

### EUROPEAN SEARCH REPORT

Application Number

EP 04 00 9798

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 326 943 A (KRC UMWELTTECHNIK GMBH) 9 August 1989 (1989-08-09) * page 4, line 29 - page 5, line 42; claims; figures 1-4 * ----- | 1-9 | B01D53/56 B01D53/79 B01D53/86 |
| X | WO 91/06506 A (FUEL TECH INC) 16 May 1991 (1991-05-16) * page 10, paragraph 4 - page 13, paragraph 1; figures 1-3 * ----- | 1-9 | |

TECHNICAL FIELDS SEARCHED (Int.Cl.7)

B01D

The present search report has been drawn up for all claims

| Place of search | Date of completion of the search | Examiner |
|---|---|---|
| Munich | 17 August 2004 | Eijkenboom, A |

EPO FORM 1503 03.82 (P04C01)

## ANNEX TO THE EUROPEAN SEARCH REPORT
## ON EUROPEAN PATENT APPLICATION NO.

EP 04 00 9798

This annex lists the patent family members relating to the patent documents cited in the above-mentioned European search report.
The members are as contained in the European Patent Office EDP file on
The European Patent Office is in no way liable for these particulars which are merely given for the purpose of information.

17-08-2004

| Patent document cited in search report | | Publication date | Patent family member(s) | | Publication date |
|---|---|---|---|---|---|
| EP 0326943 | A | 09-08-1989 | WO | 8907004 A1 | 10-08-1989 |
| | | | CS | 8900674 A3 | 17-06-1992 |
| | | | EP | 0326943 A2 | 09-08-1989 |
| | | | JP | 3503735 T | 22-08-1991 |
| | | | PL | 277507 A1 | 16-10-1989 |
| WO 9106506 | A | 16-05-1991 | CA | 1324876 C | 07-12-1993 |
| | | | US | 4777024 A | 11-10-1988 |
| | | | US | 4863705 A | 05-09-1989 |
| | | | US | 4844878 A | 04-07-1989 |
| | | | US | 4830839 A | 16-05-1989 |
| | | | US | 4877590 A | 31-10-1989 |
| | | | US | 4863704 A | 05-09-1989 |
| | | | US | 4902488 A | 20-02-1990 |
| | | | US | 5017347 A | 21-05-1991 |
| | | | AT | 122916 T | 15-06-1995 |
| | | | AT | 139751 T | 15-07-1996 |
| | | | AT | 129220 T | 15-11-1995 |
| | | | AU | 1499388 A | 26-09-1988 |
| | | | AU | 2528688 A | 18-04-1989 |
| | | | AU | 2535888 A | 18-04-1989 |
| | | | AU | 2806689 A | 02-05-1989 |
| | | | AU | 3040289 A | 19-07-1989 |
| | | | AU | 3847489 A | 12-01-1990 |
| | | | AU | 4055089 A | 12-01-1990 |
| | | | CA | 1311107 C | 08-12-1992 |
| | | | CA | 1306341 C | 18-08-1992 |
| | | | CA | 1311907 C | 29-12-1992 |
| | | | CA | 1317090 C | 04-05-1993 |
| | | | CA | 1317091 C | 04-05-1993 |
| | | | CN | 1032548 A | 26-04-1989 |
| | | | DE | 3853881 D1 | 29-06-1995 |
| | | | DE | 3853881 T2 | 23-11-1995 |
| | | | DE | 3855382 D1 | 01-08-1996 |
| | | | DE | 3855382 T2 | 07-11-1996 |
| | | | DE | 3881984 T2 | 27-01-1994 |
| | | | DE | 68924594 D1 | 23-11-1995 |
| | | | DE | 68924594 T2 | 04-04-1996 |
| | | | EP | 0304478 A1 | 01-03-1989 |
| | | | EP | 0354220 A1 | 14-02-1990 |
| | | | EP | 0333833 A1 | 27-09-1989 |
| | | | EP | 0333836 A1 | 27-09-1989 |
| | | | EP | 0344269 A1 | 06-12-1989 |
| | | | EP | 0370077 A1 | 30-05-1990 |
| | | | EP | 0414817 A1 | 06-03-1991 |
| | | | EP | 0433303 A1 | 26-06-1991 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**

EP 04 00 9798

This annex lists the patent family members relating to the patent documents cited in the above-mentioned European search report.
The members are as contained in the European Patent Office EDP file on
The European Patent Office is in no way liable for these particulars which are merely given for the purpose of information.

17-08-2004

| Patent document cited in search report | Publication date | Patent family member(s) | | Publication date |
|---|---|---|---|---|
| WO 9106506 A | | EP | 0497762 A1 | 12-08-1992 |
| | | FI | 892466 A ,B, | 22-05-1989 |
| | | GB | 2225001 A ,B | 23-05-1990 |
| | | GR | 88100134 A | 31-03-1994 |
| | | GR | 88100687 A | 31-03-1994 |
| | | JP | 2500499 T | 22-02-1990 |
| | | JP | 4502728 T | 21-05-1992 |
| | | JP | 2501715 T | 14-06-1990 |
| | | JP | 2501283 T | 10-05-1990 |
| | | JP | 2501284 T | 10-05-1990 |

EPO FORM P0459

For more details about this annex : see Official Journal of the European Patent Office, No. 12/82